# EUROPEAN PATENT SPECIFICATION

(11) **EP 3 033 163 B1**
(45) Date of publication and mention of the grant of the patent: **22.03.2023**
(21) Application number: 14836897.0
(22) Date of filing: 18.08.2014
(51) Int. Cl.: B01D 39/10, E21B 21/01, E21B 21/06, B07B 1/28, B07B 13/16, B07B 1/46

(54) **SEPARATOR AND METHOD OF SEPARATION WITH A PRESSURE DIFFERENTIAL DEVICE**
SEPARATOR UND TRENNVERFAHREN MIT EINER DRUCKDIFFERENZVORRICHTUNG
SÉPARATEUR ET PROCÉDÉ DE SÉPARATION AVEC UN DISPOSITIF À DIFFÉRENCE DE PRESSION

(30) Priority: 16.08.2013 US 201361866956 P; 26.11.2013 US 201361909162 P; 26.11.2013 US 201361909163 P; 31.01.2014 US 201461934700 P; 28.02.2014 US 201461945824 P; 29.05.2014 US 201462004752 P
(43) Date of publication of application: 22.06.2016
(73) Proprietor: M.I L.L, C., Houston, TX 77072 (US)
(72) Inventor: FRAZIER, Evan T., Covington, Kentucky 41017 (US); CADY, Eric, Florence, Kentucky 41042 (US); TIMMERMAN, Michael A., Cincinnati, Ohio 45248 (US)
(74) Representative: Schlumberger Intellectual Property Department
(86) International application number: PCT/US2014/051496
(87) International publication number: WO 2015/024012

(56) References cited:
- WO-A1-2013/101254
- DE-C1- 3 927 769
- US-A- 3 154 805
- US-A- 4 272 369
- US-A- 4 350 591
- US-A- 5 595 654
- US-A- 5 944 195
- US-A1- 2004 011 749
- US-A1- 2009 301 939
- US-A1- 2009 301 939
- US-A1- 2011 284 481
- US-A1- 2013 074 360
- US-A1- 2013 105 412
- US-A1- 2013 105 412
- US-B1- 6 988 622
- US-B2- 6 533 946
- US-B2- 6 910 411
- US-B2- 8 025 152

## Description

### BACKGROUND

Various industries, such as oil and gas, mining, agriculture and the like utilize equipment and/or methods to separating fluids from materials. For example, in the mining industry, the separation of a desired mineral component from the undesirable gangue of an ore is a necessary and significant aspect of mining. Tailings are the materials left over after the process of separating the valuable ore from the gangue. Mine tailings are usually produced from a mill in slurry form that is typically a mixture of fine mineral particles and water.

Another example of such a separation method is found in the oil and gas industry. For example, oilfield drilling fluid, often called "mud," serves multiple purposes in the oil and gas industry. Among its many functions, the drilling mud acts as a lubricant for a drilling bit and increases rate of penetration of the drilling bit. The mud is pumped through a bore of the drill string to the drill bit where the mud exits through various nozzles and ports, lubricating the drill bit. After exiting through the nozzles, the "spent" fluid returns to the surface through an annulus formed between the drill string and the drilled wellbore. The returned drilling mud is processed for continued use.

Another significant purpose of the drilling mud is to carry the cuttings away from the drill bit to the surface. The drilling fluid exiting the borehole from the annulus is a slurry of formation cuttings in drilling mud, and the cutting particulates must be removed before the mud is reused.

One type of apparatus used to remove cuttings and other solid particulates from drilling mud is commonly referred to in the industry as a "shaker" or "shale shaker." The shaker, also known as a vibratory separator, is a vibrating sieve-like table upon which returning used drilling mud is deposited and through which substantially cleaner drilling mud emerges. Typically, the shaker is an angled table with a generally perforated filter screen bottom. Returning drilling mud is deposited at the top of the shaker. As the slurry moves toward a discharge end that may be higher than an inlet end, the fluid falls through the perforations to a reservoir below thereby leaving the solid particulate material behind. The combination of the angle of inclination with the vibrating action of the shaker table enables the solid particles left behind to flow until they fall off the lower end of the shaker table. The above described apparatus is illustrative of an exemplary shaker known to those of ordinary skill in the art.

Screens used with shakers are typically placed in a generally horizontal fashion on a generally horizontal support within a basket or tray in the shaker. The shaker imparts a rapidly reciprocating motion to the basket and hence the screens. Material from which particles are to be separated is poured onto a back end of the vibrating screen and may be conveyed along the shaker toward the discharge end of the basket.

In some shakers, a fine screen cloth is used with the vibrating screen. The screen may have two or more overlaying layers of screen cloth and/or mesh. Layers of cloth and/or mesh may be bonded together and placed over a support. The frame of the vibrating screen is suspended and/or mounted on a support and vibrates by a vibrating mechanism to create a flow of trapped solids on top surfaces of the screen for removal and disposal of solids.

US 2004/0011749 discloses separating slurry in a container. US 2009/0301939 discloses a rotating separator for a slurry. US 2013/074360 describes an apparatus for improving the separation of drilling fluid from drill cuttings on a shaker comprising a shaker screen, an air vacuum system connected to the shaker screen for pulling air therethrough to enhance the flow and the separation of drilling fluid from drill cuttings and a collection system for collecting the separated drilling fluid from the underside of the screen, the air vacuum system having a control system to control the air through the shaker screen to minimize damage to the drill cuttings, while enhancing the amount of drilling fluid removed and maintaining an effective flow of drill cuttings off the shaker. DE 3927769 describes a method for the separation of granulate and water in an after-treatment section in which a vibrating screen receives the water and granulate mixture and a vacuum is applied over the entire width of the vibrating screen at longitudinally spaced locations, alternating from above and below the screen within the first third of the length of the screen to obtain low residual moisture without subsequent drying.

### DESCRIPTION OF THE DRAWINGS

Fig. 1 illustrates a vibratory separator having screens usable with the pressure differential system in accordance with embodiments disclosed herein.
Fig. 2 illustrates a side view of a pressure differential system in accordance with embodiments disclosed herein.
Fig. 3 illustrates a top view of a basket of the vibratory separator of Fig. 1 in accordance with embodiments disclosed herein.
**[0017]** FIG. 4 illustrates a side view of a tray in accordance with the embodiments disclosed herein.
**[0018]** FIG. 5 illustrates a top isometric view of the tray in accordance with the embodiments disclosed herein.
FIG. 6 illustrates a bottom isometric view of the tray.
FIG. 7 illustrates a cross-section of a pressure differential generating device in accordance with the embodiments disclosed herein.
FIG. 8 illustrates a cross-sectional view of a pressure differential generating device in accordance with embodiments disclosed herein.
FIG. 9 illustrates a conduit or hose positioned between a tray and a pressure differential generating device in accordance with embodiments disclosed herein.
FIG. 10 illustrates a pressure differential generating device positioned between a screen or separator and a conduit in accordance with embodiments disclosed herein.
FIG. 11 illustrates a portion of a screen that may be integrally formed with a tray and/or pressure differential generating device in accordance with embodiments disclosed herein.
Fig. 12 illustrates a portion of a screen that can be integrally formed with multiple pressure differential generating devices in accordance with embodiments disclosed here.

### DETAILED DESCRIPTION

Embodiments disclosed herein are applicable to separation devices that may be used in many industries. While specific embodiments may be described as used in the oilfield industry, such as use with vibratory separators, the device may also be applicable in other industries where separation of liquid-solid, solid-solid and other mixtures may be desirable. The embodiments, for example, may be used in mining, pharmaceutical, food, medical and/or other industries to separate mixtures as needed.

In the following detailed description, reference is made to accompanying figures, which form a part of the disclosure. In the figures, similar symbols or identifiers typically identify similar components, unless context dictates otherwise. The illustrative embodiments described herein are not meant to be limiting. The embodiments are exemplary embodiments.

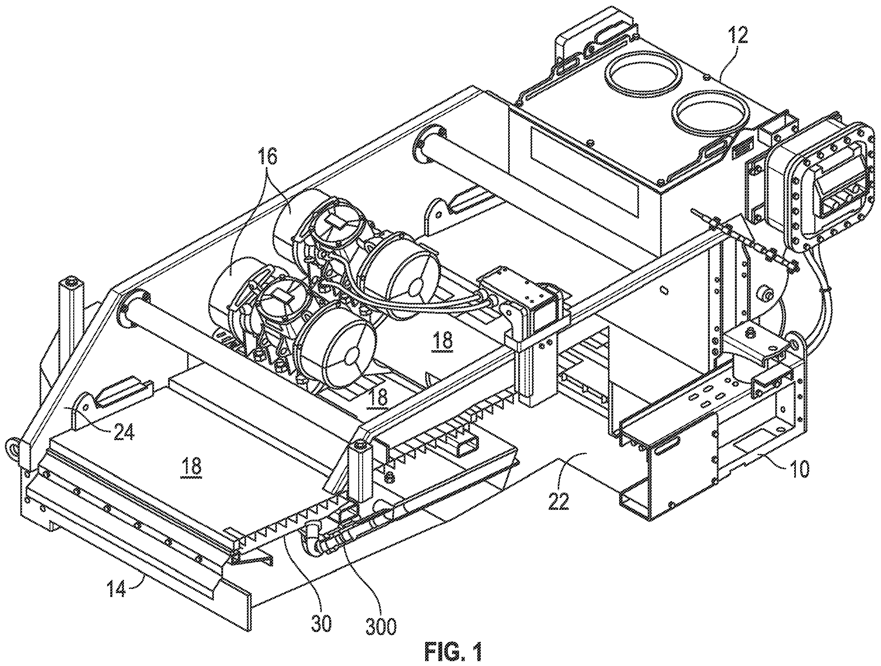

Referring now to FIG. 1, a separator 10 in accordance with the embodiments disclosed herein is illustrated. The separator 10 may have an inlet end or feed end 12 and an outlet end or discharge end 14 opposite the inlet end 12. A slurry may be provided to the separator 10 at the inlet or feed end 12. The slurry as used herein can include hydrocarbons, drilling fluid, weighting agents, water, lost circulation material and/or other fluids or substances present in the wellbore, such as the cuttings, gas, or oil. The slurry may have two or more portions that may be separated. For example, a first portion of the slurry can be sized to pass through the separator 10, such as liquid and/or solids below a predetermined size. A second portion of the slurry can be sized to be conveyed to the discharge end 14 and may include solids, such as rock or formation cuttings ("cuttings"). The separator 10 may have motors 16 to generate and/or impart vibrational motion to the separator 10, and screens 18 for separating the components of the slurry. The screens 18 may have a mesh stretched or tensioned on a metal, composite and/or other frame material. The slurry of may enter the inlet end 12 of the separator 10 and onto the screens 18. The slurry may be conveyed within the separator 10 toward the discharge end 14. The vibratory motion imparted by the motors 16 may aid in separating the slurry.

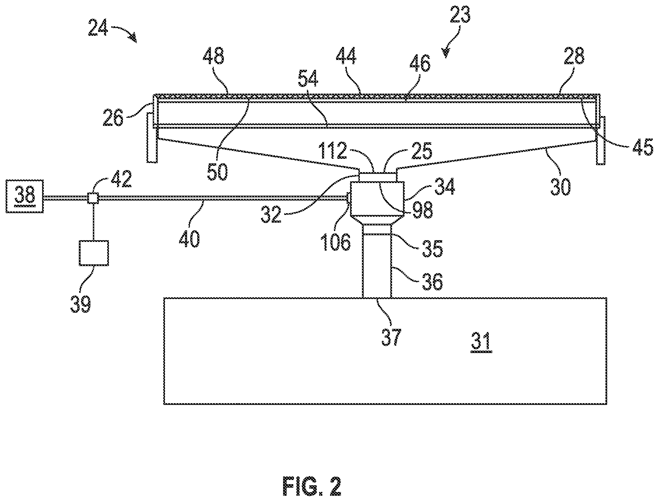

FIG. 2 illustrates an embodiment of a pressure differential system 24 that may be secured to or connected to a separator, such as the separator 10 as shown in FIG. 1. The pressure differential system 24 may be secured to a vibrating basket 26 of the separator 10. The pressure differential system 24 may be secured or otherwise connected to the separator 10 at one or more of the screens 18, all of the screens 18, and/or a portion of one or more of the screens 18 of the separator 10.

The pressure differential system 24 may be connected to, sealed to or otherwise positioned under a screen 28. In an embodiment, the screen 28 can be one of the screens 18, shown in FIG. 1. The screen 28 may have a mesh 44 stretched or pre-tensioned across a frame 46. The mesh 44 may have a top surface 48 and a bottom surface 50. The mesh 44 may be a single layer of woven mesh wire or may be multiple layers of woven mesh wire. In an embodiment, the mesh 44 may have apertures of a predetermined size. For example, the size of the apertures may be selected to separate the first portion of the slurry from the second portion of the slurry, such as at least a portion of the wellbore fluid from the cuttings. Mesh size as used herein refers to the size of the apertures in the mesh 44. The first portion of the slurry, such as, at least a portion of the wellbore fluid and solids smaller than the size of the apertures of the mesh 44, may fall or move through the mesh 44 into a bottom (or sump) 22 of the separator 10. The second portion, such as drill cuttings larger than the apertures of the mesh 44, may be conveyed to the discharge end 14 of the separator 10. In an embodiment, the first portion of the slurry can pass through the screen 28, and the first portion may be the wellbore fluid and weighting agents or other solids smaller than the apertures in the screen 28. The first portion can be collected in the sump 22 located at the lower part (or in the bottom) of the separator 10. The second portion of the slurry, for example, may include solids with a size larger than a size of the apertures of the mesh 44 and wellbore fluid not separated from the cuttings. The cuttings separated from the wellbore fluid, for example, the first portion can be conveyed to the discharge end 14 of the separator 10, as shown in Fig. 1.

The pressure differential system 24 comprises a tray 30, a connection conduit 32, a pressure differential generating device 34 and/or an output conduit 36. The pressure differential system 24 may generate a pressure differential with respect to a top area 23 above the screen 28 and a bottom area 25 below the screen 28.

The pressure differential generating device 34 may be connected to a fluid source 38 through a conduit 40. The fluid source 38 can provide fluid, such as liquid or gas, for example, air, compressed air, nitrogen, carbon dioxide, wellbore fluid, drilling fluid or other fluids usable in the pressure differential generating device 34 to generate the pressure differential. The flow of fluid from the fluid source 38 to and/or through the pressure differential generating device 34 can cause the pressure differential across the screen 28. It should be noted that the movement of the fluid from the fluid source 38 through the pressure differential generating device 34 may provide motive force for air above the screen 28 to move into and through the pressure differential generating device 34. The motive force of the air moving through the pressure differential generating device 34 can cause or increase the pressure differential.

The pressure differential can increase separation of the slurry, such as additional fluid being removed from the cuttings that would otherwise be removed without the pressure differential. The pressure differential with respect to the top area 23 and the bottom area 25 of the screen 28 draws additional fluid from the slurry to pass through the screen 28. For example, the pressure differential can draw or pull additional fluid of the slurry through the screen 28. Where the slurry has the wellbore fluid and the cuttings, the additional wellbore fluid recovered can result in a lesser amount (or volume) of drill fluid being used, since, for example, the additional drilling fluid recovered may be processed and re-used. In addition, the additional wellbore fluid recovered can result in the cuttings on the discharge end 14 of the separator 10 being dryer, that is having less of the wellbore fluid contained on or within the cuttings. As a result, a total volume or amount of the wellbore fluid and the cuttings discharged from the discharge end 14 of the separator 10 may be reduced. Additionally, if oil based drilling fluid is within the slurry, the reduction of oil on cuttings can be significant from a disposal or further processing perspective.

A fluid control assembly 42 may be connected to the conduit 40 between the fluid source 38 and the pressure differential generating device 34. The fluid control assembly 42 may have logic and/or devices to actuate a device 39 to change or alter an amount of fluid provided to the pressure differential generating device 34. For example, the device may fully open, partially open, fully close or partially close fluid communication between the fluid source 38 and the pressure differential generating device 34.

In an embodiment shown by FIG. 2, the pressure differential system 24 may be connected to a container 31 through the output conduit 36. The container 31 may be the bottom or sump 22 of the separator 10 (shown in Fig. 1) or may be a container external to the separator 10, such as a holding tank, where the gas or air may be vented, separated or re-used as the fluid for the fluid source 28. The output conduit 36 may be flexible and have a first end 35 secured to the pressure differential generating device 34. A second end 37 of the output conduit 36 may be connected to the container 31.

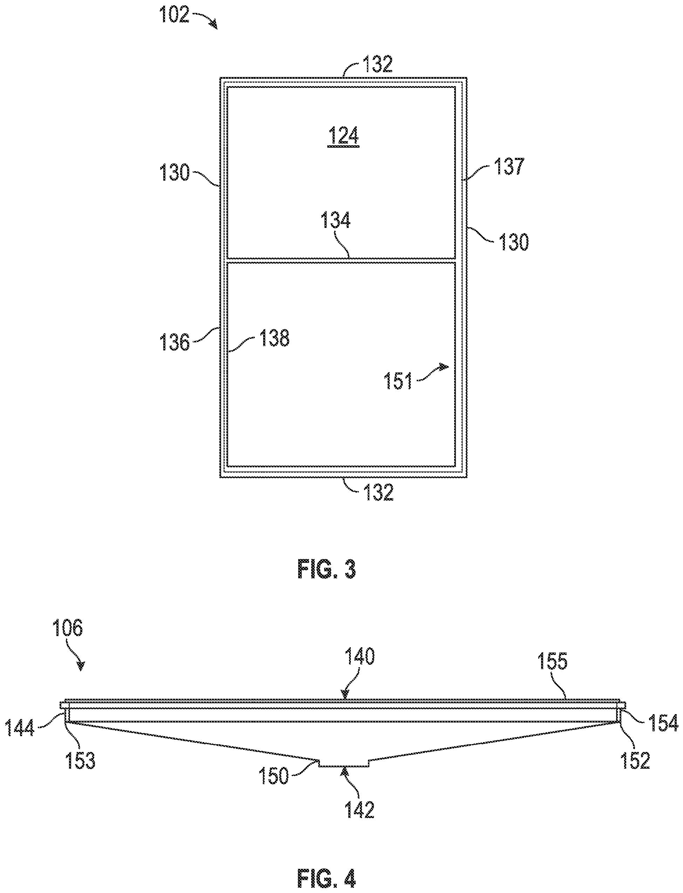

FIG. 3 illustrates a basket 102 that may be secured or formed within the separator 10 of FIG. 1. The basket 102 may have a basket frame 124 comprising side rails 130 connected to end rails 132. The basket frame 124 may also have a cross member 134 parallel to the end rails 132. The cross member 134 may connect to the side rails 130 between the end rails 132. In an embodiment, the cross member 134 may connected to the side rails 132 at a point equidistant between the end rails 132. In an embodiment, the side rails 130 may be longer than the end rails 132 so the basket 102 has a generally or substantially rectangular shape. The side rails 130 and the end rails 132 may have a rim 136 that extends upwardly from the top 126 of the basket 102. The rim 136 and the top 126 of the basket 102 may form a ledge 138 around an inner perimeter 137 of the rim 136. The screen 28 and/or the tray 30 may be secured into or fluidly sealed to the ledge 138 within the inner perimeter 137.

As shown in FIGS. 4-6, the tray 106 may have a top 140, a bottom 142, a perimeter frame 144, a flange 146, a floor panel 148 and/or an interface panel 150. The perimeter frame 144 may have an upper circumferential edge 152 and a lower circumferential edge 154. The upper circumferential edge 152 may be located at the top of the tray 106. The flange 146 may extend outwardly from the upper circumferential edge 152 of the perimeter frame 144. The flange 146 may interface with the bottom of the basket 102. An interior wall 151 of the basket frame 124 may be flush with an interior 153 wall of the perimeter frame 144. A gasket 155 may be positioned between the basket 102 and the flange 146 to create a seal between the basket 102 and the tray 106. The gasket 155 may be positioned between the tray 106 and the screen 28. The basket 102 and the flange 146 of the tray 106 may be integrally formed so that the basket 102 and the tray 106 form a single assembly.

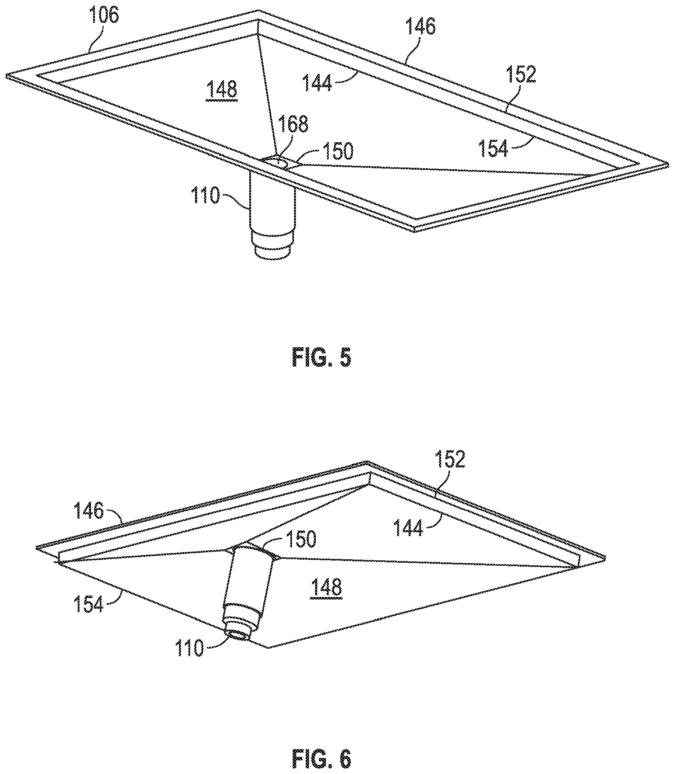

The floor panel 148 of the tray 106 may taper downwardly and inwardly from the lower circumferential edge 154 of the perimeter frame 144 towards the interface panel 150. The floor panel 148 may have a depth 154 defined between the lower circumferential edge 154 of the perimeter frame 144 and the bottom 142 of the tray 106. The interface panel 150 may be located at the bottom 142 of the tray 106. In an embodiment, the interface panel 150 may be located at the center of the floor panel 148. In another embodiment, as illustrated in FIG. 5 and FIG. 6, the interface panel 150 may be offset from the center of the floor panel 148.

The taper of the floor panel 148 may cause the portion of the slurry passing through the screen 28 to move towards the interface panel 150. The interface panel 150 may have an opening 168. The interface panel 150 may be connected to a first end 169 of the connection conduit 32. In an embodiment, the interface panel 150 and the connection conduit 32 may be formed as a single assembly. In another embodiment, the basket 102, the tray 106 and the connection conduit 32 may be integrally formed as a single assembly.

The basket 102 and the tray 106 may be installed on support rails 156 on one or more sides. The support rails 156 may be connected to, for example, an industrial filtration system by resilient mounts. The resilient mounts may be springs, hydraulic dampers, pneumatic isolators and/or any other device known to a person of ordinary skill in the art that may isolate vibration. The support rails 156 may be connected to one or more vibration motors. In an embodiment, a clamping system 158 may secure the support rails 156, the separating screen 104, the basket 102 and/or the tray 106.

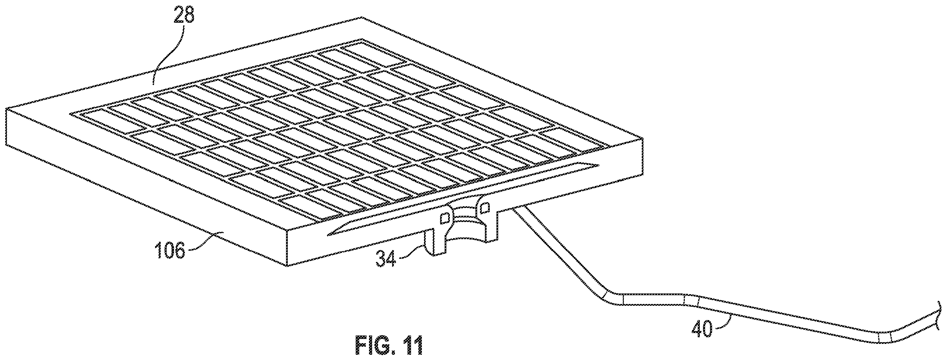

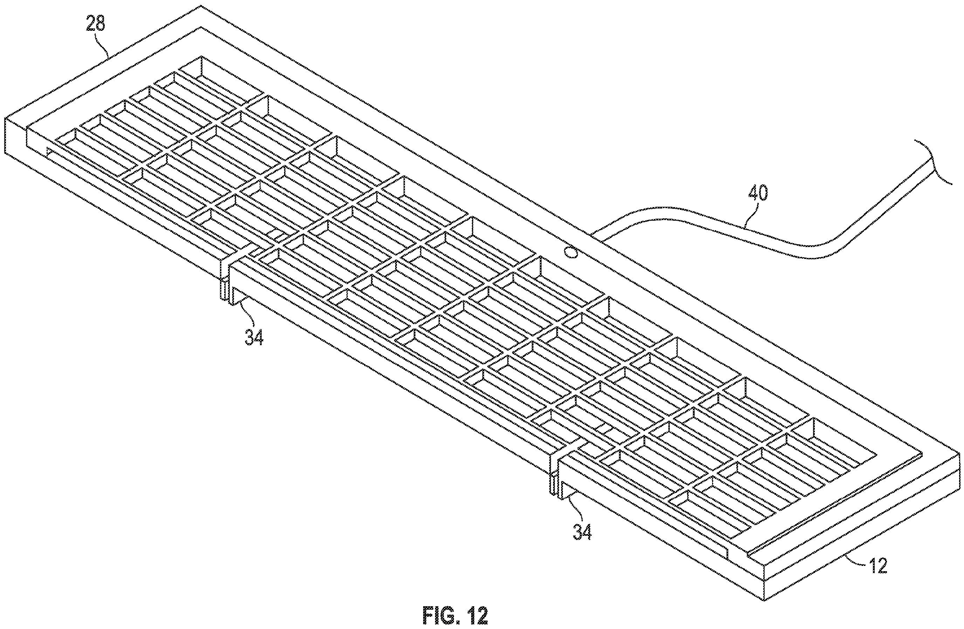

FIGS. 11 and 12 illustrate embodiments of the tray 106, integrally formed with the pressure differential generating device 34. FIGS. 11 and 12 illustrate a cut-away of a portion of the screen 28, such as approximately half of the screen 28 severed between opposing sides of the screen. In an embodiment, the tray 106 may be made of a composite material, such as carbon fiber, glass fiber, glass filled plastic, and other similar materials. For example, a carbon fiber composite vacuum tray may include layers of carbon fiber material coupled together via a resin, adhesive, and/or other coupling material. The surfaces of the tray 106 and/or the pressure differential generating device 34 can be polished to reduce fluid from sticking or accumulating.

In an embodiment, the tray 106 and the pressure differential generating device 34 may be integrally formed with the screen 28 as shown in FIGS. 11 and 12. The tray 106, the pressure differential generating device 34, and the screen 28 may be molded together or may be constructed separated and coupled (e.g. fused) together. The pressure differential generating device 34 may be positioned anywhere within the perimeter of the tray 106 and/or the screen 28. FIG. 11 illustrates the pressure differential generating device 34 located substantially in the center of the screen 28. Alternatively, the tray 106 of FIG. 11 may have a conduit or threaded connection integrally formed with the tray 106. The conduit or the threaded connection may replace the pressure differential generating device 34 of the FIG. 11. The conduit or the threaded connection may then be connected to the pressure differential generating device 34. In some instances, fittings or threaded fittings may be molded onto the tray 106. In such an embodiment, the tray 106 and the screen 28 may be integrally formed or separate. FIG. 12 illustrates two of pressure differential generating devices 34 located near a center of the screen 28 in one direction and closer to a perimeter of the screen 28 in the other direction.

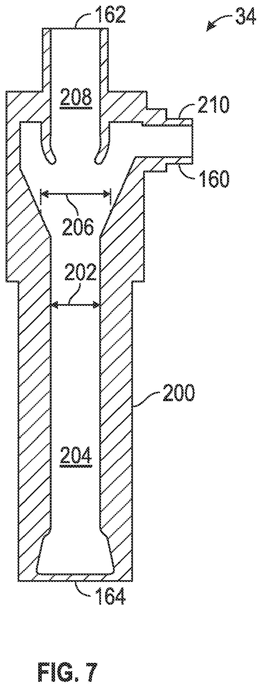

As shown in FIG. 7, the pressure differential generating device 34 has a fluid injection port 160, an input 162 and an output 164. In an embodiment, a second end 98 of the connection conduit 32 may be connected to the pressure differential generating device 34. In another embodiment, the second end 98 of the connection conduit 32 may be integrally formed with the input 162 of the pressure differential generating device 34 to form one assembly. The floor panel 150 as shown in FIGS. 5 and 6 may connect to the input 162 of the pressure differential generating device 34. The pressure differential generating device 34 may have a body 200. The body 200 may have an axial bore 204 with a first inner diameter 206 and a second inner diameter 202. The body 200 may also have a nozzle 208 extending into the axial bore 204. The fluid injection port 106 may be attached to the body 200 so that a fluid canal 210 may be perpendicular to the axial bore 204. The axial bore 204 may taper from the first inner diameter 206 to the second inner diameter 202 between the fluid canal 210 and the output 164 of the pressure differential generating device 34. In an embodiment, the basket 102, the tray 106, and/or the connection conduit 32 may be integrally formed into a single assembly. The pressure differential generating device 34 may be an air amplifier, line vacuum, or device having a structure to cause a Venturi effect, a particular case of Bernoulli's principle, upon the supply of fluid. The Venturi effect as used herein generally relates to increasing the velocity of the fluid provided from the fluid source 38 from a decrease in cross-sectional area in the pressure differential generating device 34. The fluid source 38, as shown in FIG. 2, may be connected to the fluid injection port 160 through the conduit 40. The fluid control assembly 42 may control the flow of fluid to the pressure differential generating device 34. The fluid control assembly 42 may be a ball valve, a solenoid or any other fluid control device suitable for controlling compressed gas.

The fluid may be injected into the fluid injection port 160. The fluid may reduce the available volume for particles and/or fluid entering the pressure differential generating device 34 through the input 162. A pressure change may be created between the input 162 and the output 164 of the pressure differential generating device 110.

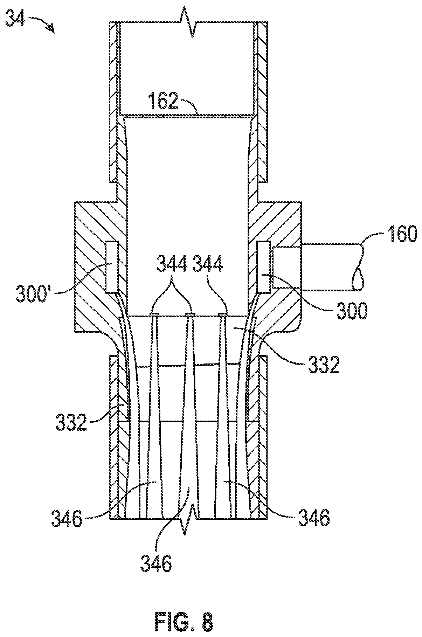

Injecting the fluid into the pressure differential generating device 34 through the fluid injection port 160 creates a pressure change between the input 162 and the output 164 of the pressure differential generating device 34. The pressure change creates a low pressure area at the bottom area 25 of the separating screen 28. The low pressure area at the bottom area 25 creates a pressure differential between the top area 23 and the bottom area 25 of the screen 28. The pressure differential may assist and/or facilitate movement of a portion of the slurry, such as a portion of the wellbore fluid that may pass through the screen 28. FIG. 8 illustrates an embodiment of the pressure differential generating device 34. The fluid from the fluid source 38 may flow through a fluid inlet 35 into an annular plenum chamber 300. The fluid may then be injected into the nozzles 344. As a result, the fluid flowing into the nozzles 344 may generate fluid jets 346. The fluid jets 346 may create the pressure differential across the screen 28. For example, the pressure differential generating device 34 may generate a pressure differential by narrowing orifices in which the fluid flows. The pressure differential generating device 34 may draw a portion of the slurry through the screen 28 and may accelerate the portion of the slurry to convey the slurry. The pressure differential generating device 34 may eject a small amount of the fluid to produce the pressure differential with a relatively higher output of the fluid at a discharge end 332 of the pressure differential generating device 34. The pressure differential generating device 34 may be constructed from aluminum, stainless steel, composite and/or another material. In an embodiment, the pressure differential generating device 34 may provide maintenance-free operation since the vacuum generator 30 may have no moving parts and/or may not require electricity to operate.

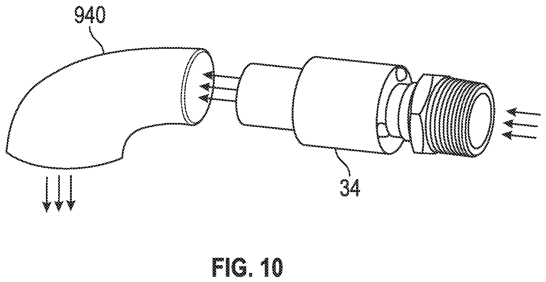

Referring now to FIG. 10, another embodiment of the pressure differential generating device 34 is illustrated. As shown, the pressure differential generating device 34 may be positioned horizontally to cause the fluid to reach a relatively high velocity and discharge from the pressure differential generating device 34. The fluid may enter into a conduit 940 that may be a tube, such as a long conduit or an oversized elbow to make use of the high velocity of the fluid to increase the pressure differential across the screen 28. The conduit 940 may be positioned a distance from the pressure differential generating device 34 or connected, such as directly connected, to the pressure differential generating device 34. In an embodiment, for a given flow rate of the fluid to the pressure differential generating device 34, the pressure differential generated may be greater with the conduit 940 than without the conduit 940. The conduit 940 may increase the motive force by providing an additional volume of the fluid moving through the pressure differential generating device 34.

The separator 10 may have a mass flow measurement device, such as a cutting flow meter, to monitor the mixture that may be delivered to the input end of the screen 28. The amount of fluid provided to the pressure differential generating device 34 may be changed to adjust for changing mixture density during filtering. For example, when the industrial filtration system filters drill cuttings from the drilling fluid, the size and/or the quantity of the drilling cuttings may change. Additionally, the density of the drilling fluid may change.

A larger pressure differential can increase or enhance separation of a portion of the slurry through the separating screen 28. For example, a slurry with a relatively high density may demand a larger or more significant pressure differential. Injecting or providing more fluid to the pressure differential generating device 34 may cause a larger pressure differential and may increase the throughput of the wellbore fluid that may pass through the mesh 44.

The pressure differential generating device 34 may be utilized to generate a constant pressure differential, or it may be utilized to pulse or vary the pressure differential with respect to time. In some instances, depending upon the pressure differential, a constant pressure differential may cause the portion of the slurry that does not pass through the mesh 44 to stall on the screen 28. The pressure differential may remain constant but be reduced to permit the portion of the slurry not passing through the screen 28 to convey toward the discharge end 14 of the separator 10. For example, less fluid may be provided to the fluid injection port 160 to reduce or lower the pressure differential.

In an embodiment, the pressure differential generated by the pressure differential generating device 34 may be toggled or pulsed by changing the amount of fluid provided to the pressure differential generating device 34. For example, the fluid control assembly 42 or the device 39, may control the fluid provided to the pressure differential generating device 34 to change the pressure differential from a first value to a second value. The first value may be higher than the second value. In some embodiments, the second value may be zero. In an instance where a minimal or no pressure differential is desired, further fluid may not be provided to the injection port 160 of the pressure differential generating device 34.

At the second value, for example, the pressure differential can permit the stalled portion of the slurry to move further toward the discharge end 14 of the separator 10. In an embodiment, changing the pressure differential from the first value to the second value may occur at predetermined intervals and/or may be controlled by the fluid control assembly 42. Additionally, the changes in the pressure differential can occur at irregular intervals and/or may be controlled by an operator.

A person having ordinary skill in the art will appreciate that there may be numerous values of the pressure differential. The portion of the slurry passing through the screens 18, 28 may continue to move into the tray 106 and through the pressure differential generating device 34 if the fluid provided to the pressure differential generating device 34 is temporarily reduced or halted.

The fluid control assembly 42 may be manually adjusted or automatically adjusted to control the amount of the fluid that may be injected or provided to the pressure differential generating device 34. An algorithm, software or other logic may control the pressure differential such that the value provided is optimized based on the density of the fluid, flow rate of the slurry at the inlet end 12, deck angle of the separator 10, speed or force of the motors 16, volume of slurry on the screen 18 closest to the inlet end 12 of the separator 10 or other factor that will be appreciated by those having ordinary skill in the art.

As an example, the second value may not generate sufficient pressure differential to draw any additional portion of the slurry through the screen 28 as compared to the portion of the slurry that moves through the screen 28 without the pressure differential. The second value may prime the pressure differential generating device 34 by continuous providing the fluid through the injector port 160. The second value may minimize performance degradation of the pressure differential generating device 34 caused by blinding or otherwise clogging or blocking the injector port 160. In some examples, the first value may have a pressure differential of 344.75-1034.25 kPa (50-150 PSI). In some examples, the second value may have a pressure range of 0-344.75 kPa (0-50 PSI). The first value may be provided for a first duration, and the second value for a second duration. The first duration and the second duration may be the same or different.

The fluid control assembly 42 can control the first duration and the second duration. For example, the ratio between the first duration and the second duration may range from 1:1 (one unit of time for the first duration to one unit of time for the second duration) to 30:1 (thirty units of time for the first duration to one unit of time for the second duration) and may be biased toward either the first value or the second value.

In one or more embodiments, the fluid control assembly 42 may control the pressure differential generating device 34 to remove the maximum fluid portion of the slurry by maximizing resonance time on the screen 28 for a predetermined processing rate of the slurry. The predetermined processing rate may be related to the rate at which the slurry is provided to the separator 10 or a desired degree of separation of the slurry. For example, the predetermined processing rate may be a rate at which the separator 10 can process a given flow rate of the slurry and reduce fluid on cuttings of the slurry to less than a predetermined threshold.

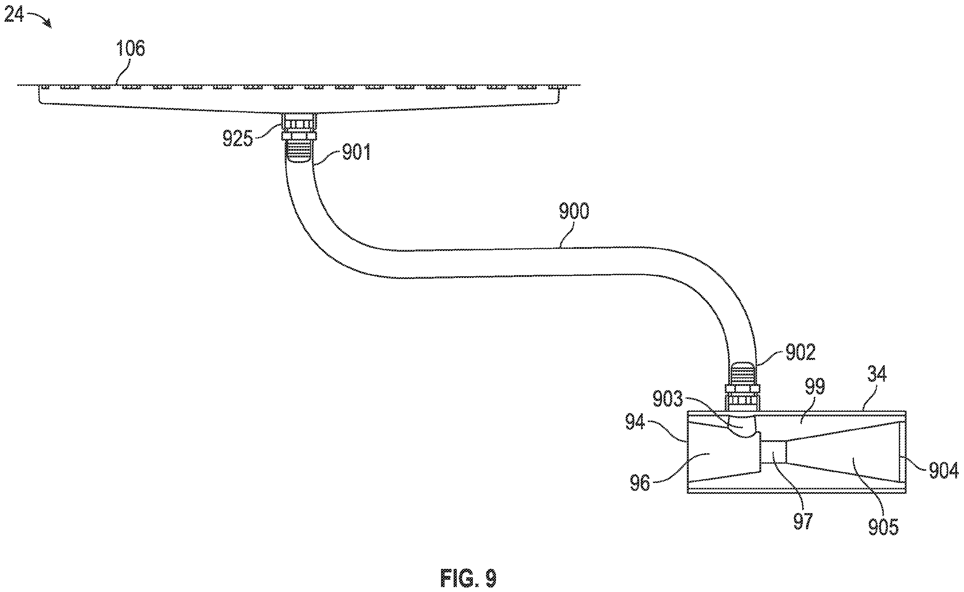

As shown in the embodiment illustrated in FIG. 9, the pressure generating differential device 34 may be located a distance from the tray 106 and/or the separator 10. The pressure differential generating device 34 may be connected by a conduit 900 to the pressure differential generating device 34, for example, by a fitting 925. The pressure differential generating device 34 may be positioned at a distance from the tray 106, screen 28 and/or separator 10 substantially equal to the length of the conduit 900. The conduit 900 may be a single or multi-piece or multi-component tube, hose, pipe or other device for transporting fluid. A first end of the extraction hose 39 may connect to the fitting 925, and a second end 902 of the extraction hose 925 may be connected to the pressure differential generating device 34. Access to the vacuum generator 30 may be improved by the remote location of the pressure differential generating device 34. As shown in FIG. 9, an auxiliary extraction hose 59 may be connected to the second end 32 of the vacuum generator 30.

In the embodiment of FIG. 9, the pressure differential generating device 34 may have a motive inlet 904, an inlet 903 for the slurry, and an outlet 94. The fluid may move through the motive inlet 904 into an inlet nozzle 905 and an outlet diffuser 96. The inlet nozzle 905 may be converging and the outlet diffuser 96 may be diverging to thereby form a convergent-divergent nozzle 99. In an embodiment, the pressure differential generating device 34 may be an ejector or a jet pump, such as an eductor-jet pump.

The converging-diverging nozzle 99 may utilize the Venturi effect to convert the pressure energy of the fluid to velocity energy which creates a low pressure zone that draws in the slurry passing through the screen 28. After passing through a throat 97 of the pressure differential generating device 34, the fluid and the slurry may expand, and the velocity may reduce which may result in recompressing the fluid and the slurry by converting velocity back into pressure energy.

The fluid provided to pressure generating differential device 34 may be any of the afore-mentioned fluids. Advantageously, the embodiment of FIG. 9 may be advantageous if the fluid is a liquid, such as drilling fluid or the wellbore fluid. The fluid may be used as a motive fluid in the pressure differential system 24 for generating the pressure differential.

The fluid source 38 to provide the motive force may utilize pumps, such as, a positive displacement pump, a momentum transfer pump or an entrapment pump, reciprocating pump, centrifugal pump, vacuum pump, pneumatic pump, air pump, piston pump, rotary piston pump, rotary vane pump, screw pump, scroll pump, liquid ring pump, external vane pump, Wankel pump, Toepler pump, and Venturi vacuum pump, and others. Blowers may be utilized at the fluid source 38, such as, a booster pump, a rotary lobe blower, and a vacuum blower. The fluid source 38 may utilize ejectors or aspirators, such as steam ejectors, water aspirators, or ejectors and aspirators utilizing other motive fluids. In some embodiments, drilling fluid may be used as the motive fluid for the pressure differential generating device 34.

## Claims

1. A system comprising:
a vibratory separator (10) having an inlet end (12) and a discharge and (14);
a screen (18, 28) connected to the vibratory separator to separate a drilling or wellbore fluid from a drill cuttings in a slurry, wherein the drilling or wellbore fluid is passable through the screen;
a pressure differential generating device (34) having an input port (162), an output port (164) and a fluid injection port (160), the input port (162) being in fluid communication with the screen (18, 28); and
a fluid source (38) in fluid communication with the fluid injection port (160) of the pressure differential generating device (34), wherein a flow of fluid from the fluid source (38) to the pressure differential generating device (34) causes a pressure differential with respect to a top area (23) and a bottom area (25) of the screen and wherein the generated pressure differential causes the drilling or wellbore fluid to be drawn through the screen (28) and through the pressure differential generating device (34) via the input port (162) and the output port (164).

2. The system of claim 1 further comprising:
a tray (30) positioned under the screen (18, 28), wherein the pressure differential generating device (34) is connected to the tray (30).

3. The system of claim 2, wherein the tray (30) is integrally formed with the pressure differential generating device (34).

4. The system of claim 2, wherein the tray (30) is integrally formed with the screen (18, 28) and further wherein the tray (30) and the screen (18, 28) comprise composite material.

5. The system of claim 2, wherein the tray (30) is integrally formed with a fitting, and further comprising a conduit is secured to the fitting and the pressure differential generating device.

6. The system of claim 2 further comprising a conduit connected to the tray (30) and the pressure differential generating device (34), wherein the conduit is positioned between the tray (30) and the pressure differential generating device (34).

7. The system of claim 2 wherein the pressure differential generating device (34) is secured between the tray (30) and the conduit.

8. The system of any one of the preceding claims wherein the pressure differential generating device (34) generates the pressure differential by utilizing the Venturi effect.

9. The system of any one of the preceding claims further comprising:
a fluid control assembly (42) controlling an amount of fluid provided to the pressure differential generating device (34), wherein the fluid control assembly (42) controls the fluid to change the pressure differential generated from the pressure differential generating device (34) from a first value to a second value, the first value higher than the second value.

10. The system of any one of the preceding claims, wherein the fluid is air, drilling fluid, carbon dioxide or water.

11. A method comprising:
arranging a screen (18, 28) between an inlet end (12) and a discharge end (14) of a vibratory separator (10);
distributing a slurry comprised of a drilling or wellbore fluid capable of passing through the screen (18, 28) and drilling cuttings incapable of passing through the screen (18, 28);
flowing a fluid from a fluid source (38) through an injection port of a pressure differential generating device (34), the pressure differential generating device (34) having an input port (162) in fluid communication with the screen (18, 28), an output port (164), wherein a flow of fluid from the fluid source (38) to the pressure differential generating device (34) causes a pressure differential between an area (23) above the screen and an area (25) below the screen ; and
drawing the the drilling or wellbore fluid through the screen (28) and through the pressure differential generating device (34) via the input port (162) and the output port (164).

12. The method of claim 11 further comprising:
altering the pressure differential by altering an amount of fluid provided to the pressure differential generating device (34).

13. The method of claim 11 further comprising:
pulsing the pressure differential between a first value of the pressure differential and a second value of the pressure differential, wherein the second value is greater than zero and the first value is greater than the second value.

14. The method of claim 11, wherein the pressure differential generating device (34) is remote from the screen (18, 28).

## Patentansprüche

1. System, umfassend:
einen Vibrationsabscheider (10), der ein Einlassende (12) und eine Abführung und (14) aufweist,
ein Sieb (18, 28), das mit dem Vibrationsabscheider verbunden ist, um eine Bohrspülung oder ein Bohrlochfluid aus einem Bohrklein in einer Schlämme abzuscheiden, wobei die Bohrspülung oder das Bohrlochfluid durch das Sieb hindurchleitbar ist;
eine Druckdifferenzerzeugungsvorrichtung (34), die eine Eintragsöffnung (162), eine Austragsöffnung (164) und eine Fluidinjektionsöffnung (160) aufweist, wobei sich die Eintragsöffnung (162) in strömungstechnischer Verbindung mit dem Sieb (18, 28) befindet; und
eine Fluidquelle (38) in strömungstechnischer Verbindung mit der Fluidinjektionsöffnung (160) der Druckdifferenzerzeugungsvorrichtung (34), wobei ein Fluidfluss aus der Fluidquelle (38) zur Druckdifferenzerzeugungsvorrichtung (34) eine Druckdifferenz in Bezug auf einen Oberbereich (23) und einen Unterbereich (25) des Siebs bewirkt, und wobei die erzeugte Druckdifferenz bewirkt, dass die Bohrspülung oder das Bohrlochfluid mithilfe der Eintragsöffnung (162) und der Austragsöffnung (164) durch das Sieb (28) und durch die Druckdifferenzerzeugungsvorrichtung (34) hindurchgesaugt wird.

2. System nach Anspruch 1, ferner umfassend:
eine unter dem Sieb (18, 28) positionierte Wanne (30), wobei die Druckdifferenzerzeugungsvorrichtung (34) mit der Wanne (30) verbunden ist.

3. System nach Anspruch 2, wobei die Wanne (30) einstückig mit der Druckdifferenzerzeugungsvorrichtung (34) ausgebildet ist.

4. System nach Anspruch 2, wobei die Wanne (30) einstückig mit dem Sieb (18, 28) ausgebildet ist und wobei ferner die Wanne (30) und das Sieb (18, 28) einen Verbundwerkstoff umfassen.

5. System nach Anspruch 2, wobei die Wanne (30) einstückig mit einem Fitting ausgebildet ist und ferner eine Leitung umfasst, die am Fitting und an der Druckdifferenzerzeugungsvorrichtung befestigt ist.

6. System nach Anspruch 2, ferner umfassend eine mit der Wanne (30) und der Druckdifferenzerzeugungsvorrichtung (34) verbundene Leitung, wobei die Leitung zwischen der Wanne (30) und der Druckdifferenzerzeugungsvorrichtung (34) positioniert ist.

7. System nach Anspruch 2, wobei die Druckdifferenzerzeugungsvorrichtung (34) zwischen der Wanne (30) und der Leitung befestigt ist.

8. System nach einem der vorhergehenden Ansprüche, wobei die Druckdifferenzerzeugungsvorrichtung (34) die Druckdifferenz durch Nutzung des Venturi-Effekts erzeugt.

9. System nach einem der vorhergehenden Ansprüche, ferner umfassend:
eine Fluidsteuerungsanordnung (42), die eine der Druckdifferenzerzeugungsvorrichtung (34) bereitgestellte Menge an Fluid steuert, wobei die Fluidsteuerungsanordnung (42) das Fluid steuert, um die aus der Druckdifferenzerzeugungsvorrichtung (34) erzeugte Druckdifferenz von einem ersten Wert auf einen zweiten Wert zu ändern, wobei der erste Wert höher als der zweite Wert ist.

10. System nach einem der vorhergehenden Ansprüche, wobei das Fluid Luft, Bohrspülung, Kohlendioxid oder Wasser ist.

11. Verfahren, umfassend:
Anordnen eines Siebs (18, 28) zwischen einem Einlassende (12) und einem Abführende (14) eines Vibrationsabscheiders (10);
Verteilen einer Schlämme, die eine Bohrspülung oder ein Bohrlochfluid, die bzw. das in der Lage ist, durch das Sieb (18, 28) hindurchzutreten, und Bohrklein, das nicht in der Lage ist, durch das Sieb (18, 28) hindurchzutreten, umfasst,
Fließenlassen eines Fluids aus einer Fluidquelle (38) durch eine Injektionsöffnung einer Druckdifferenzerzeugungsvorrichtung (34) hindurch, wobei die Druckdifferenzerzeugungsvorrichtung (34) eine Eintragsöffnung (162) in strömungstechnischer Verbindung mit dem Sieb (18, 28), eine Austragsöffnung (164), aufweist, wobei ein Fluidfluss aus der Fluidquelle (38) zur Druckdifferenzerzeugungsvorrichtung (34) eine Druckdifferenz zwischen einem Bereich (23) über dem Sieb und einem Bereich (25) unter dem Sieb bewirkt, und
Saugen der Bohrspülung oder des Bohrlochfluids mithilfe der Eintragsöffnung (162) und der Austragsöffnung (164) durch das Sieb (28) hindurch und durch die Druckdifferenzerzeugungsvorrichtung (34) hindurch.

12. Verfahren nach Anspruch 11, ferner umfassend:
Verändern der Druckdifferenz durch Verändern einer an die Druckdifferenzerzeugungsvorrichtung (34) bereitgestellten Menge an Fluid.

13. Verfahren nach Anspruch 11, ferner umfassend:
Pulsierenlassen der Druckdifferenz zwischen einem ersten Wert der Druckdifferenz und einem zweiten Wert der Druckdifferenz, wobei der zweite Wert größer als null und der erste Wert größer als der zweite Wert ist.

14. Verfahren nach Anspruch 11, wobei sich die Druckdifferenzerzeugungsvorrichtung (34) vom Sieb (18, 28) entfernt befindet.

## Revendications

1. Système comprenant :
un séparateur vibrant (10) présentant une extrémité d'entrée (12) et une évacuation (14) ;
un tamis (18, 28) relié au séparateur vibrant pour séparer un fluide de forage ou de puits de forage provenant des déblais de forage dans une boue, dans lequel le fluide de forage ou de puits de forage peut passer à travers le tamis ;
un dispositif de génération de pression différentielle (34) présentant un orifice d'entrée (162), un orifice de sortie (164) et un orifice d'injection de fluide (160), l'orifice d'entrée (162) étant en communication fluidique avec le tamis (18, 28) ; et
une source de fluide (38) en communication fluidique avec l'orifice d'injection de fluide (160) du dispositif de génération de pression différentielle (34), dans lequel un écoulement de fluide depuis la source de fluide (38) vers le dispositif de génération de pression différentielle (34) provoque une pression différentielle par rapport à une zone supérieure (23) et une zone inférieure (25) du tamis et dans lequel la pression différentielle générée provoque l'aspiration du fluide de forage ou de puits de forage à travers le tamis (28) et à travers le dispositif de génération de pression différentielle (34) par l'intermédiaire de l'orifice d'entrée (162) et de l'orifice de sortie (164).

2. Système selon la revendication 1, comprenant en outre :
un plateau (30) positionné sous le tamis (18, 28), dans lequel le dispositif de génération de pression différentielle (34) est relié au plateau (30).

3. Système selon la revendication 2, dans lequel le plateau (30) est formé d'une seule pièce avec le dispositif de génération de pression différentielle (34).

4. Système selon la revendication 2, dans lequel le plateau (30) est formé d'une seule pièce avec le tamis (18, 28) et dans lequel, en outre, le plateau (30) et le tamis (18, 28) comprennent un matériau composite.

5. Système selon la revendication 2, dans lequel le plateau (30) est formé d'une seule pièce avec un raccord et comprenant en outre un conduit fixé solidement au raccord et au dispositif de génération de pression différentielle.

6. Système selon la revendication 2 comprenant en outre un conduit relié au plateau (30) et au dispositif de génération de pression différentielle (34), dans lequel le conduit est positionné entre le plateau (30) et le dispositif de génération de pression différentielle (34).

7. Système selon la revendication 2 dans lequel le dispositif de génération de pression différentielle (34) est fixé solidement entre le plateau (30) et le conduit.

8. Système selon l'une quelconque des revendications précédentes dans lequel le dispositif de génération de pression différentielle (34) génère la pression différentielle en utilisant l'effet Venturi.

9. Système selon l'une quelconque des revendications précédentes, comprenant en outre :
un ensemble de régulation de fluide (42) régulant une quantité de fluide fournie au dispositif de génération de pression différentielle (34), dans lequel l'ensemble de régulation de fluide (42) régule le fluide pour changer la pression différentielle générée par le dispositif de génération de pression différentielle (34) d'une première valeur à une seconde valeur, la première valeur étant supérieure à la seconde valeur.

10. Système selon l'une quelconque des revendications précédentes, dans lequel le fluide est de l'air, un fluide de forage, du dioxyde de carbone ou de l'eau.

11. Procédé comprenant :
la disposition d'un tamis (18, 28) entre une extrémité d'entrée (12) et une extrémité d'évacuation (14) d'un séparateur vibrant (10) ;
la distribution d'une boue composée d'un fluide de forage ou de puits de forage pouvant passer à travers le tamis (18, 28) et des déblais de forage ne pouvant pas passer à travers le tamis (18, 28) ;
l'écoulement d'un fluide à partir d'une source de fluide (38) à travers un orifice d'injection d'un dispositif de génération de pression différentielle (34), le dispositif de génération de pression différentielle (34) présentant un orifice d'entrée (162) en communication fluidique avec le tamis (18, 28), un orifice de sortie (164), dans lequel un écoulement de fluide à partir de la source de fluide (38) vers le dispositif de génération de pression différentielle (34) provoque une pression différentielle entre une zone (23) au-dessus du tamis et une zone (25) en dessous du tamis ; et
l'aspiration du fluide de forage ou de puits de forage à travers le tamis (28) et à travers le dispositif de génération de pression différentielle (34) par l'intermédiaire de l'orifice d'entrée (162) et de l'orifice de sortie (164).

12. Procédé selon la revendication 11 comprenant en outre :
l'altération de la pression différentielle en altérant une quantité de fluide fournie au dispositif de génération de pression différentielle (34).

13. Procédé selon la revendication 11 comprenant en outre :
la pulsation de la pression différentielle entre une première valeur de la pression différentielle et une seconde valeur de la pression différentielle, dans lequel la seconde valeur est supérieure à zéro et la première valeur est supérieure à la seconde valeur.

14. Procédé selon la revendication 11 dans lequel le dispositif de génération de pression différentielle (34) est à distance du tamis (18, 28).
